# EUROPÄISCHE PATENTSCHRIFT

(11) **EP 4 134 594 B1**
(45) Veröffentlichungstag und Bekanntmachung des Hinweises auf die Patenterteilung: **15.10.2025**
(21) Anmeldenummer: 22189630.1
(22) Anmeldetag: 10.08.2022
(51) Int. Cl.: F24D 13/02, B25B 9/00, H02G 1/06, H02G 3/36, F24D 3/14

(54) **ELEKTRISCHES FLÄCHENTEMPERIERSYSTEM**
ELECTRIC SURFACE TEMPERATURE CONTROL SYSTEM
SYSTÈME ÉLECTRIQUE DE MISE EN TEMPÉRATURE DE SURFACE

(30) Priorität: 11.08.2021 DE 102021120939
(43) Veröffentlichungstag der Anmeldung: 15.02.2023
(60) Teilanmeldung: 24166612.2
(73) Patentinhaber: Infinex Holding GmbH, 72221 Haiterbach (DE)
(72) Erfinder: Hartl, Martin, 72160 Horb (DE); Hirmer, Thomas, 72221 Haiterbach (DE)
(74) Vertreter: Mammel und Maser Patentanwälte PartG mbB

(56) Entgegenhaltungen:
- EP-A2- 2 372 041
- DE-C1- 10 117 195
- DE-U1- 202005 015 259
- DE-U1- 202018 107 262
- DE-U1- 202019 104 864
- US-A1- 2011 101 291

## Beschreibung

Die Erfindung betrifft ein elektrisches Flächentemperiersystem für einen Boden-, Wand- oder Deckenaufbau.

Zur Flächentemperierung von einem Boden-, Wand- oder Deckenaufbau sind zwei voneinander abweichende Technologien bekannt. Zum einen wird eine solche Flächentemperierung aufgrund von in Rohren durchströmtem Wasser erzielt, die im Untergrund verlegt sind. Zum anderen werden Heizkabel bestromt, die auf dem Untergrund aufgebracht werden.

Elektrische Fußbodenheizungen sind allgemein bekannt. Diese bestehen aus sogenannten Wärmematten, wie diese beispielsweise unter www.fussbodenheizungdirekt.de/elektroheizung bekannt sind. Solche Wärmematten bestehen aus einer ausrollbaren Dünnschichtmatte, auf welcher Heizkabel für die elektrische Fußbodenheizung mäanderförmig auf der Dünnschichtmatte vorverlegt und befestigt sind. Solche Dünnschichtmatten mit vorverlegten Heizkabeln werden auf dem bestehenden Untergrund, wie beispielsweise Estrich, ausgerollt. Auf diese Dünnschichtmatte wird ein Kleber oder Mörtel aufgebracht, um diese mit dem Untergrund, insbesondere Estrich, zu verbinden und andererseits eine Boden-, Wand- oder Deckenverkleidung mit dem Untergrund, insbesondere Estrich, zu verbinden.

Solche Wärmematten zur Bildung einer elektrischen Fußbodenheizung ermöglichen eine geringe Flexibilität in der Anpassung an die Geometrie oder den Zuschnitt des Raumes, da die Dünnschichtmatte eine vorgegebene Bahnbreite aufweist. Zudem sollen die darauf vorverlegten Elektroheizleitungen nicht von der Dünnschichtmatte entfernt, durchtrennt oder anderweitig verlegt werden.

Aus der DE 20 2018 107 262 U1 ist ein Flächentemperiersystem bekannt, welches einen formstabilen, flächigen Träger umfasst, der als eine Hohlkammerplatte oder aus einer Polymerschaumstoff-Dämmschicht gebildet ist. Auf diesem Träger ist eine Trägerfolie mit einem zweiten Element aufgebracht, welches mit einem ersten Element, das um einen Heizdraht gewickelt ist, eine Klettverbindung bildet.

Aus der EP 2 372 041 A2 ist eine Trägerplatte sowie ein Verfahren zu deren Herstellung bekannt. Diese Trägerplatte umfasst eine folienartige Platte aus Kunststoff mit einer Vielzahl von Kammern, die durch Vertiefungen aus einer ebenen folienartigen Platte ausgebildet sind. Auf einer Außenseite der Platte ist eine erste Funktionsschicht auf Stirnseiten der Vertiefungen aufgebracht, welche die Vertiefungen überspannt. Auf der gegenüberliegenden Plattenseite ist eine weitere Funktionsschicht aufgebracht, welche die Oberseite sowie die Vertiefungen ausgekleidet.

Aus der US 2011/0101291 A1 ist eine Verlegevorrichtung zum Verlegen eines Heizkabels auf einer Trägerplatte bekannt. Das Heizkabels wird außerhalb einer Führungsstange einer Rolle zugeführt, durch welche das Heizkabel durch Verklipsen an der Trägerplatte befestigt wird. Die Verlegevorrichtung des Heizkabels ist durch die Ausrichtung der Verklipsung bestimmt.

Aus der DE 101 17 195 C1 ist des Weiteren eine Verlegevorrichtung zum Verlegen einer elektrisch betriebenen Flächenheizung bekannt. Diese Verlegevorrichtung nimmt eine erste Rolle auf, von welcher ein Heizdraht abgezogen und einer Andrückrolle zugeführt wird. Des Weiteren ist eine zweite Rolle vorgesehen, von welcher eine Wärmeleitfolie abgezogen wird, wobei die Wärmeleitfolie zwischen der Andrückrolle und dem Heizdraht hindurchgeführt wird, um den Heizdraht mittels der Wärmeleitfolie auf einem Untergrund zu fixieren.

Der Erfindung liegt die Aufgabe zugrunde, ein elektrisches Flächentemperiersystem für einen Boden-, Wand oder Deckenaufbau vorzuschlagen, welches in einfacher Weise eine Verlegung von Heizkabeln sowie eine individuelle Anpassung an die Größe und den Zuschnitt des Raumes ermöglicht.

Diese Aufgabe wird durch ein elektrisches Flächentemperiersystem für einen Boden-, Wand- oder Deckenaufbau gelöst, welches zumindest ein Heizkabel umfasst, das auf zumindest einer Trägerplatte anordenbar ist, wobei die zumindest eine Trägerplatte als eine folienartige Platte aus Kunststoff ausgebildet ist, die eben oder profiliert ausgebildet sein kann, und eine erste Plattenseite aufweist, die zur Auflage auf dem Untergrund vorgesehen ist und eine zweite Plattenseite umfasst, die der ersten gegenüberliegt und zur Aufnahme eines zur Ausbildung einer Kontaktschicht mit der aufzubringenden Flächenbekleidung aushärtenden Kontaktmittels, wie Mörtel oder Kleber, vorgesehen ist sowie mit einer an der zweiten Plattenseite angeordneten ersten Funktionsschicht, wobei die an der zweiten Plattenseite angeordnete erste Funktionsschicht aus einer faserigen Schicht ausgebildet ist und an dem Heizkabel zumindest abschnittsweise eine zweite Funktionsschicht vorgesehen ist, welche aus einem Hakenband ausgebildet ist und der Heizdraht auf der Trägerplatte durch Bildung eines Klettverschlusses zwischen der Funktionsschicht und der zweiten Funktionsschicht befestigbar ist. Dieses elektrische Flächentemperiersystem weist den Vorteil auf, dass eine einfache Verlegung und Anpassung an die Geometrie beziehungsweise den Zuschnitt des Raumes als auch an eine Verteilung einer Heizleistung innerhalb des Raumes ermöglicht ist. Die Trägerplatte, welche bevorzugt als bahnförmiges Material vorliegt, kann in einfacher Weise an die Geometrie des Raumes durch Zuschneiden angepasst werden. Darauffolgend kann das Heizkabel auf der oder den Trägerplatten verlegt werden, wobei der Verlauf des Heizkabels in einfacher Weise erfolgen und frei ausgewählt werden kann. Beispielsweise kann eine mäanderförmige Positionierung des Heizkabels auf der Trägerplatte vorgesehen sein, wobei die Abstände und/oder Größe der Windungen beliebig ausgerichtet werden können. So kann beispielsweise in einem Bereich nahe zu einem Fenster oder einer Außenwand eine dichtere Anordnung der Heizkabel erfolgen als beispielsweise in einem dazu entfernteren Bereich im Raum.

Die Trägerplatte, welche eine folienartige Platte aus Kunststoff ist, ist mit einer Vielzahl von Kammern ausgebildet, die durch Vertiefungen und/oder Erhöhungen aus einer Ebene der folienartigen Platte ausgebildet sind, wobei deren äußeren Stirnseiten die erste Plattenseite und gegenüberliegend verbleibende Flächenabschnitte die zweite Plattenseite bilden. Eine solche Trägerplatte weist des Weiteren den Vorteil auf, dass eine Entkopplung, insbesondere Spannungs- und/oder Schall-entkopplung zwischen der durch die Trägerplatte getragenen Flächenbekleidung und dem Untergrund, insbesondere Estrich, gegeben ist.

Die Trägerplatte weist bevorzugt Wandabschnitte auf, die sich zwischen den die erste Plattenseite bildenden Stirnseiten der Kammern und die Kammern verbindenden Flächenabschnitten, welche die zweite Plattenseite bilden, erstrecken und senkrecht oder konisch verjüngend zu den Stirnseiten der Kammern verlaufen. Dadurch sind hinterschneidungsfreie Vertiefungen ausgebildet, in welchen in einfacher Weise das aushärtbare Kontaktmittel zur Fixierung der Flächenbekleidung zur Trägerplatte eingebracht werden kann.

Des Weiteren ist bevorzugt die folienartige Platte aus einem thermoplastischen Elastomer, insbesondere aus einem HDPE, PE oder PP ausgebildet. Solche folienartigen Platten weisen zum einen hinreichende Steifigkeit für die Entkopplung auf und können zum anderen noch leicht zugeschnitten werden.

Des Weiteren besteht bevorzugt die erste Funktionsschicht aus einem bahnförmigen Material und ist auf die zweite Plattenseite der Trägerplatte zumindest teilweise oder vollständig auflaminiert, aufgeklebt oder aufgeschweißt. Dadurch kann zum einen eine einfache Vorfixierung des Heizkabels ermöglicht sein. Zum anderen kann eine verbesserte Verkrallung des Kontaktmittels zur folienartigen Platte ermöglicht sein, um die Flächenverkleidung verbessert aufzunehmen.

Des Weiteren ist bevorzugt vorgesehen, dass bei einer Trägerplatte, welche eine Vielzahl von Kammern aufweist, die durch Vertiefungen ausgebildet sind, die erste Funktionsschicht auf den Flächenabschnitten befestigt ist und die Vertiefungen überspannt oder die Vertiefungen der Kammern ausgekleidet sind.

Des Weiteren ist bevorzugt die erste Funktionsschicht als eine Filzschicht, eine Vliesschicht, ein faseriges Gewebe oder netzartiges Fasergewebe ausgebildet. Bevorzugt werden Kunstfasern eingesetzt.

Die zweite, das Heizkabel zumindest abschnittsweise umgebende Funktionsschicht ist bevorzugt streifenförmig ausgebildet, sodass diese wendel- oder spiralförmig das Heizkabel umgibt. Alternativ kann auch die zweite Funktionsschicht durch zumindest einen Längsstreifen ausgebildet sein, der oder die längs zum Heizkabel ausgerichtet und daran vorgesehen sind. Der Längsstreifen kann die Ummantelung des Heizkabels teilweise oder vollständig umgeben.

Nach einer alternativen Ausführungsform kann das Heizkabel eine Ummantelung aufweisen, bei der zur Außenseite weisend das Hakenband integriert ist.

Das Heizkabel kann bevorzugt auf den Flächenabschnitten der zweiten Plattenseite aufliegend und/oder die Vertiefungen der Kammern überspannend an den Flächenabschnitten der zweiten Plattenseite, die sich zwischen den Vertiefungen erstrecken, befestigbar sein. Dies ermöglicht einen beliebigen Verlauf zur Verlegung des Heizkabels auf der Trägerplatte.

Gemäß einer weiteren bevorzugten Ausgestaltung kann die Trägerplatte an der ersten Plattenseite eine dritte Funktionsschicht aufweisen, welche sich vorzugsweise flächig erstreckt, und vorzugsweise ist die dritte Funktionsschicht ein Gewebe oder Vlies. Bei einer Trägerplatte mit Vertiefungen erstreckt sich die dritte Funktionsschicht in der Ebene der ersten Plattenseite. Dies dient insbesondere dazu, um eine Verklebung zwischen der Trägerplatte und dem Untergrund beziehungsweise Estrich zu ermöglichen. Diese dritte Funktionsschicht kleidet die von der ersten Plattenseite aus gesehen sich erstreckenden Vertiefungen vorzugsweise nicht aus. Dadurch kann zwischen den Vertiefungen ein freier Bereich von Mörtel gegeben sein, der zum Verbinden der ersten Plattenseite mit dem Untergrund, insbesondere Estrich, vorgesehen ist.

Des Weiteren weist bevorzugt die Trägerplatte oder die Trägerplatte mit der ersten Funktionsschicht auf der zweiten Plattenseite oder die Trägerplatte mit der ersten Funktionsschicht auf der zweiten Plattenseite sowie der dritten Funktionsschicht auf der ersten Plattenseite eine Höhe von weniger als vier Millimeter auf. Dies ermöglicht zusammen mit dem Heizkabel, an welchem die zweite Funktionsschicht vorgesehen ist, dass das gesamte elektrische Flächentemperiersystem auch nachträglich auf bestehende Fußböden eingebaut werden kann, um beispielsweise einzelne Räume mit einer elektrischen Flächentemperierung nachzurüsten.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Darstellung eines elektrischen Flächentemperiersystems,
- Figur 2: eine schematische Schnittansicht des elektrischen Flächentemperiersystems in einer Einbausituation,
- Figur 3: eine schematische Schnittansicht einer alternativen Ausführungsform des elektrischen Flächentemperiersystems in einer Einbausituation,
- Figur 4: eine perspektivische Ansicht einer alternativen Ausführungsform eines Heizkabels,

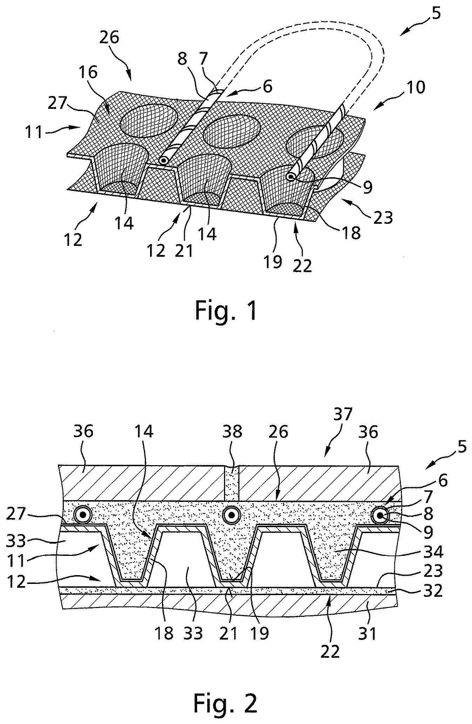

In Figur 1 ist perspektivisch ein elektrisches Flächentemperiersystem 5 dargestellt. Dieses elektrische Flächentemperiersystem 5 umfasst zumindest eine Trägerplatte 10 und zumindest ein Heizkabel 6. Des Weiteren umfasst das elektrische Flächentemperiersystem 5 eine Steuerung und/oder ein Thermostat, um das Heizkabel zu betreiben. Dies ist nicht näher dargestellt.

Diese Trägerplatte 10 umfasst eine folienartige Platte 11 aus Kunststoff, welche eine Vielzahl von Kammern 12 aufweist, die durch Vertiefungen 14 in der folienartigen Platte 11 gebildet sind. Die bevorzugt einseitig ausgerichteten Vertiefungen 14 der Kammern 12 weisen eine vorzugsweise sich wiederholende Anordnung in Zeilen und Spalten oder festgelegte anderweitige Muster zueinander auf. Zwischen den Vertiefungen 14 sind Flächenabschnitte 16 ausgebildet, welche die Kammern 12 miteinander verbinden. Ausgehend von diesen Flächenabschnitten 16 erstrecken sich gemäß der ersten Ausführungsform konisch sich verjüngende Wandabschnitte 18, welche in einen Boden 19 übergehen, die mit einer außenliegenden Stirnseite 21 eine erste Plattenseite 22 bilden. An den Stirnseiten 21 der Kammern 12 ist ein Gewebe oder Vlies 23 auflaminiert oder aufgeschweißt, welche zur Klammerung der Trägerplatte 10 in einer auf einem Untergrund aufgebrachten Kontaktschicht, wie beispielsweise einem Klebemittel oder einem Mörtel, dient. Das Gewebe oder Vlies 23 ist bevorzugt als netzartiges Gewebe, insbesondere als feinmaschiges Gittergewebe oder als perforiertes Vlies, ausgebildet. Ein solches Gewebe kann beispielsweise aus Polypropylen ausgebildet sein.

Der ersten Plattenseite 22 gegenüberliegend ist eine zweite Plattenseite 26 vorgesehen, welche durch die die Kammern 12 verbindenden Flächenabschnitte 16 und die Vertiefungen 14 gebildet ist. Auf dieser Plattenseite 26 ist eine erste Funktionsschicht 27 aus einem bahnförmigen Material aufgebracht, welche zumindest eine Innenseite der Vertiefungen 14 auskleidet und mit dieser Innenseite verbunden ist. Bevorzugt ist diese erste Funktionsschicht 27 auch mit den Flächenabschnitten 16 verbunden. Bevorzugt ist die zweite Funktionsschicht 27 vollflächig auf der zweiten Plattenseite 26 aufgebracht. Bevorzugt ist die erste Funktionsschicht 27 auf die folienartige Platte aufgeschweißt oder auflaminiert. In einigen Fällen kann auch ein Aufpressen oder Aufkleben vorgesehen sein. Somit umfasst die erste Funktionsschicht 27 dieselbe Kontur wie die zweite Plattenseite 26 der Trägerplatte 10. Die erste Funktionsschicht 27 aus einem bahnförmigen Material ist gemäß einer ersten bevorzugten Ausführungsform aus einer faserigen Schicht, einem feinmaschigen Gewebe, einem Gittergewebe oder Vlies, das auch perforiert sein kann, ausgebildet. Bei der ersten Funktionsschicht 27 handelt es sich bevorzugt um ein Vlies, welches beispielsweise aus Polyethylen oder Polypropylen besteht. Ebenso kann die erste Funktionsschicht 27 haftverstärkende Komponenten aufweisen. Diese können beispielsweise in Form von Glasfasern oder Granulat ausgebildet sein, die aus der Oberfläche der ersten Funktionsschicht 27 zumindest teilweise herausragen.

Das Heizkabel 6 besteht aus einem Heizleiter 9, beispielsweise aus Kupfer, und einer Ummantelung 8, die eine Isolierung bildet. Die Ummantelung 8 kann aus einem polymeren Material bestehen. Am Außenumfang des Heizkabels 6 ist eine zweite Funktionsschicht 7 vorgesehen. Diese zweite Funktionsschicht 7 kann ein band- oder streifenförmiges Material sein, welches auf einer Außenseite als Hakenband ausgebildet ist und auf einer Innenseite eine Auflagefläche zum Verbinden mit der Ummantelung 9 umfasst. Diese zweite Funktionsschicht 7 kann an der Ummantelung 9 durch eine Klebeverbindung gehalten sein. Bevorzugt ist an der Funktionsschicht 7 dem Hakenband gegenüberliegend eine Klebeschicht oder ein doppelseitiges Klebeband aufgebracht. Alternativ kann die Ummantelung 8 des Heizkabels 6 eine Oberfläche aufweisen, die einem Hakenband entspricht. Des Weiteren kann alternativ anstelle einer wendelförmigen oder spiralförmigen Umschlingung des Heizkabels 6 die als Band oder Streifen ausgebildete zweite Funktionsschicht 7 auch nur längs entlang des Heizkabels 6 angebracht sein. Dabei kann die Funktionsschicht 7 die Ummantelung 8 teilweise, beispielsweise um 60°, 90°, 180° oder dergleichen, oder vollständig umgeben. Auch können zwei oder mehrere Längsstreifen, die schmaler als ein Außendurchmesser der Ummantelung 8 sind, parallel zueinander an der Ummantelung 8 vorgesehen sein. Diese Längsstreifen können parallel zur Längsachse des Heizkabels 6 oder spiralförmig umlaufend an dem Heizkabel 6 vorgesehen sein.

Die Verlegung des Heizkabels 6 kann sowohl entlang den Flächenabschnitten 16 und/oder die Vertiefungen 14 der Trägerplatte 10 überspannend erfolgen. Die Bildung eines Klettverschlusses an den Flächenabschnitten 16 vor und hinter der Vertiefung 14 genügt zur Fixierung des Heizkabels 6 auf der Trägerplatte 10.

In Figur 2 ist eine schematische Seitenansicht der erfindungsgemäßen Trägerplatte 10 in einer Einbausituation dargestellt. Auf einem Untergrund 31, insbesondere Estrich, wird ein Kleber oder Mörtel 32 aufgebracht. Im Anschluss daran wird die folienartige Platte 11 mit dem Gewebe oder Vlies 23 auf dem Untergrund 31 ausgelegt. Der Mörtel 32 verklammert sich in dem Gewebe oder Vlies 23. Die Maschengröße des Gewebes oder Vlieses 23 beziehungsweise deren Perforation, sofern vorgesehen, ist derart ausgebildet, dass beim Auslegen der Trägerplatte 10 ein Eindringen des Mörtels in Bereiche 33, also zwischen den Kammern 12 gebildeten Freiräumen, nicht erfolgt, jedoch eine Verklammerung mit dem Gewebe oder Vlies 23. Dadurch kann eine Luftzirkulation in diesen Freiräumen erfolgen.

Anschließend wird ein Kleber oder Mörtel 34 auf die zweite Plattenseite 26 aufgetragen. Dieser Mörtel oder Kleber 34 kann von dem auf dem Untergrund 31 aufgebrachten Kleber 32 auch abweichen. Der Mörtel oder Kleber 34 wird dabei auf die Flächenabschnitte 16 aufgetragen, die Kammern 12 werden befüllt, und das oder die Heizkabel 6 werden von Mörtel oder Kleber 34 umgeben, sodass bevorzugt eine ebene und durchgehende Auflagefläche durch den Mörtel oder Kleber 32 ausgebildet ist, um eine Flächenbekleidung 37 bestehend aus einzelnen Fliesen oder Platten 36 aufzunehmen und zu fixieren. Während dem Befüllen der Kammern 12 und dem Aufstreichen des Mörtels oder Klebers 34 auf die Flächenabschnitte 16 erfolgt aufgrund der ersten Funktionsschicht 27 ein Verhaken des Klebers oder Mörtels 34 mit dieser ersten Funktionsschicht 27. Die verlegte Position des Heizkabels 6 auf der Trägerplatte 10 bleibt durch den gebildeten Klettverschluss zwischen der ersten Funktionsschicht 27 an der Trägerplatte 10 und der zweiten Funktionsschicht 7 an dem Heizkabel aufrechterhalten. Gleichzeitig können in den Vertiefungen 14 sogenannte Mörtelstelzen ausgebildet werden, über welche ein Lastabtrag auf den Untergrund 31 erfolgt. Nach dem Aufbringen der Platten 36 zur Bildung einer Flächenbekleidung 37 und dem Aushärten des Klebers oder Mörtels 34 werden Fugen 38 zur Fertigstellung der Flächenbekleidung 37 eingebracht.

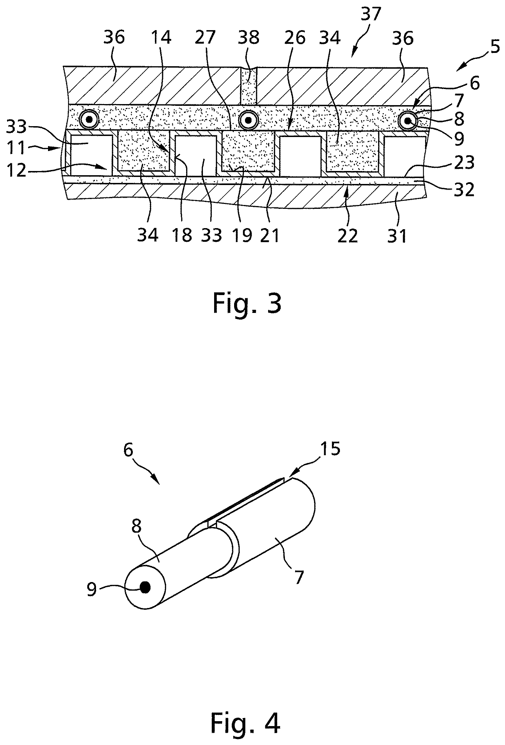

In Figur 3 ist eine alternative Ausführungsform der erfindungsgemäßen Trägerplatte 10 in einer Einbausituation dargestellt. Die folienartige Platte 11 weicht von der Ausführungsform in Figur 1 dahingehend ab, dass die Kammern 12 einen senkrecht stehenden Wandabschnitt 18 aufweisen und somit zylindrische Vertiefungen 14 bilden. Im Übrigen entspricht diese Ausführungsform der Ausführungsform gemäß den Figuren 1 und 2 und weist dieselben Vorteile auf.

Alternativ zur Ausgestaltung der Trägerplatte 10 gemäß Figur 1 kann vorgesehen die Trägerplatte 10 als eine folienartige Platte aus Kunststoff ausgebildet sein, welche eben ist. Diese alternative Ausführungsform der Trägerplatte ist somit frei von Erhöhungen und/oder Vertiefungen 14. Diese Trägerplatte 10 kann auf der zweiten Plattenseite 26 die erste Funktionsschicht 27 aufweisen. Je nach Einbausituation kann die erste Plattenseite 27 mit einer dritten Funktionsschicht 23, insbesondere einem netzartigen Gewebe, versehen sein oder auch frei von einer dritten Funktionsschicht verbleiben.

Die in den Figuren 1 bis 3 dargestellte Trägerplatte mit den Vertiefungen 14 weist des Weiteren den Vorteil auf, dass eine Entkopplung zwischen der Flächenbekleidung 37 und dem Untergrund 31 beziehungsweise dem Estrichboden ermöglicht ist.

In Figur 4 ist perspektivisch eine alternative Ausgestaltung des Heizkabels 6 dargestellt. Der Aufbau des Heizkabels 6 bezogen auf den Heizleiter 9 und die Ummantelung 8 entspricht der vorbeschriebenen Ausführungsform. Bei dieser Ausführungsform ist vorgesehen, dass die Funktionsschicht 7 als ein Längsstreifen ausgebildet ist, dessen Breite einem Außenumfang der Ummantelung 8 entspricht. Diese zweite Funktionsschicht 7 umgibt vollständig die Ummantelung 8, so dass längs der Längsachse des Heizkabels 6 ein verlaufender Stoß 15 durch die beiden Längsseiten der als Längsstreifen ausgebildeten zweiten Funktionsschicht 7 gebildet ist. Dies weist den Vorteil auf, dass gegenüber der spiral- oder wendelförmigen Anordnung der zweiten Funktionsschicht 7 beim Aufbringen auf das Trägerelement 10 gemäß den Ausführungsformen in Figur 1 bis 3 eine verbesserte Haftung gegeben ist. Diese vollständige Ummantelung 8 des Heizkabels 6 durch die zweite Funktionsschicht 7 beeinträchtigt die Verlegerichtung oder die Verlegeart des Heizkabels 6, welche vorzugsweise mäanderförmig erfolgt, nicht.

## Patentansprüche

1. Elektrisches Flächentemperiersystem für einen Boden-, Wand- oder Deckenaufbau, insbesondere für einen plattenbekleidenden Wand-, Decken- oder Bodenaufbau,
- mit zumindest einem Heizkabel (16),
- mit zumindest einer Trägerplatte (10), welche eine folienartige Platte (11) aus Kunststoff aufweist, die eben oder profiliert ist, und eine erste Plattenseite (22) umfasst, die zur Auflage auf einem Untergrund (31) vorgesehen ist und eine zweite Plattenseite (26) umfasst, die der ersten Plattenseite (22) gegenüberliegt und zur Aufnahme eines zur Ausbildung einer Kontaktschicht mit der aufzubringenden Flächenbekleidung (37) aushärtbaren Kontaktmittels (34), wie Mörtel oder Kleber, vorgesehen ist, und mit einer an der zweiten Plattenseite (26) angeordneten ersten Funktionsschicht (27),
- wobei die erste Funktionsschicht (27) aus einer faserigen Schicht ausgebildet ist, und
- wobei an dem Heizkabel (6) zumindest abschnittsweise eine zweite Funktionsschicht (7) vorgesehen ist, welche aus einem Hakenband ausgebildet ist und das Heizkabel (6) auf der Trägerplatte (10) durch die erste Funktionsschicht (27) und zweite Funktionsschicht (7) unter Bildung eines Klettverschlusses befestigbar ist,
**dadurch gekennzeichnet,**
**dass** die zumindest eine Trägerplatte (10), welche die folienartige Platte (11) aus Kunststoff umfasst, mit einer Vielzahl von Kammern (12) ausgebildet ist, die durch Vertiefungen (14) und/oder Erhöhungen aus einer Ebene der folienartigen Platte (11) ausgebildet sind, deren äußeren Stirnseiten (21) die erste Plattenseite (22) bilden und gegenüberliegend die zweite Plattenseite (26) durch Flächenabschnitte (16) gebildet ist, und Wandabschnitte (18) zwischen den die erste Plattenseite (22) bildenden Stirnseiten (21) und den Flächenabschnitten (16), welche die zweite Plattenseite (26) bilden, sich senkrecht oder konisch verjüngend von den Flächenabschnitten (16) zu den Stirnseiten (21) der Kammer (12) erstrecken.

2. Flächentemperiersystem nach Anspruch 1, **dadurch gekennzeichnet, dass** die erste Funktionsschicht (27) aus einem bahnförmigen Material besteht und auf die zweite Plattenseite (26) zumindest teilweise oder vollständig auflaminiert, aufgeklebt oder aufgeschweißt ist und vorzugsweise die erste Funktionsschicht (27) an den zwischen den Vertiefungen (14) gebildeten Flächenabschnitten (16) befestigt ist und die Vertiefungen (14) überspannt oder die Vertiefungen (14) der Kammern (12) auskleidet.

3. Flächentemperiersystem nach einem der vorhergehenden Ansprüche, **dadurch gekennzeichnet, dass** die erste Funktionsschicht (27) aus einem Filz, einem Vlies, einem faserigen Gewebe oder netzartigen Fasergewebe ausgebildet ist.

4. Flächentemperiersystem nach Anspruch 1, **dadurch gekennzeichnet, dass** die zweite Funktionsschicht (7) streifenförmig ausgebildet ist und wendel- oder spiralförmig das Heizkabel (6) umgibt oder als zumindest ein Längstreifen ausgebildet und an der Ummantelung (8) des Heizkabels (6) entlang dem Heizkabel (6) fixiert ist, wobei der zumindest eine Längsstreifen zumindest teilweise die Ummantelung (8) des Heizkabels (6) umgreift oder der eine Längsstreifen das Heizkabel (6) vollständig umgibt, oder dass am Außenumfang einer Ummantelung (8) des Heizkabels (6) die zweite Funktionsschicht (7) integriert ist.

5. Flächentemperiersystem nach einem der vorhergehenden Ansprüche, **dadurch gekennzeichnet, dass** das Heizkabel (6) auf den Flächenabschnitten (16) aufliegend und/oder die Vertiefungen (14) überspannend an den an die Vertiefungen (14) angrenzenden Flächenabschnitten (16) auf der Trägerplatte (12) unter Bildung von Klettverschluss-Verbindungen befestigbar ist.

6. Flächentemperiersystem nach einem der vorhergehenden Ansprüche, **dadurch gekennzeichnet, dass** auf der ersten Plattenseite (22) der Trägerplatte (10) eine dritte Funktionsschicht (23), insbesondere ein Gewebe oder ein Vlies, vorgesehen ist.

7. Flächentemperiersystem nach einem der vorhergehenden Ansprüche, **dadurch gekennzeichnet, dass** die Trägerplatte (10) mit der ersten Funktionsschicht (27) oder die Trägerplatte (10) mit der ersten und dritten Funktionsschicht (27, 23) eine Höhe von weniger als vier Millimeter aufweist.

## Claims

1. Electric surface temperature control system for a floor, wall or ceiling structure, in particular for a panel-covering wall, ceiling or bottom structure,
- with at least one heating cable (16),
- with at least one carrier plate (10), which has a film-like plate (11) made of plastic, which is flat or profiled, and comprises a first plate side (22), which is provided for support on a substrate (31) and comprises a second plate side (26), which is opposite the first panel side (22) and is provided for receiving a contact agent (34), such as mortar or adhesive, which can be cured to form a contact layer with the surface covering (37) to be applied, and with a first functional layer (27) arranged on the second panel side (26),
- wherein the first functional layer (27) is formed from a fibrous layer, and
- wherein a second functional layer (7) is provided on the heating cable (6), at least in sections, which is formed from a hook tape and the heating cable (6) can be fastened to the carrier plate (10) by the first functional layer (27) and second functional layer (7), forming a hook-and-loop fastener,
**characterized in**
**that** the at least one carrier plate (10), which comprises the film-like plate (11) made of plastic, is formed with a plurality of chambers (12) which are formed by depressions (14) and/or elevations from a plane of the film-like plate (11), the outer end faces (21) of which form the first plate side (22) and opposite which the second plate side (26) is formed by surface sections (16), and wall sections (18) between the end faces (21) forming the first panel side (22) and the surface sections (16) forming the second panel side (26) extend vertically or conically tapering from the surface sections (16) to the end faces (21) of the chamber (12).

2. Surface temperature control system according to claim 1, **characterized in that** the first functional layer (27) consists of a web-like material and is at least partially or completely laminated, glued or welded onto the second panel side (26) and preferably the first functional layer (27) is attached to the surface sections (16) formed between the recesses (14) and spans the recesses (14) or lines the recesses (14) of the chambers (12).

3. Surface temperature control system according to one of the preceding claims, **characterized in that** the first functional layer (27) is formed from a felt, a fleece, a fibrous fabric or net-like fibrous fabric.

4. Surface temperature control system according to claim 1, **characterized in that** the second functional layer (7) is designed in the form of a strip and surrounds the heating cable (6) in a helical or spiral shape or is designed as at least one longitudinal strip and is fixed to the sheathing (8) of the heating cable (6) along the heating cable (6), wherein the at least one longitudinal strip at least partially surrounds the sheathing (8) of the heating cable (6) or the one longitudinal strip completely surrounds the heating cable (6), or that the second functional layer (7) is integrated on the outer circumference of a sheathing (8) of the heating cable (6).

5. Surface temperature control system according to one of the preceding claims, **characterized in that** the heating cable (6) rests on the surface sections (16) and/or can be attached to the surface sections (16) adjacent to the recesses (14), spanning the recesses (14), on the carrier plate (12), forming hook-and-loop fastener connections.

6. Surface temperature control system according to one of the preceding claims, **characterized in that** a third functional layer (23), in particular a fabric or a fleece, is provided on the first plate side (22) of the carrier plate (10).

7. Surface temperature control system according to one of the preceding claims, **characterized in that** the carrier plate (10) with the first functional layer (27) or the carrier plate (10) with the first and third functional layers (27, 23) has a height of less than four millimetres.

## Revendications

1. Système électrique de régulation de température de surface pour une structure de sol, de mur ou de plafond, en particulier pour une structure de mur, de plafond ou de sol recouverte de panneaux,
- avec au moins un câble chauffant (16),
- avec au moins une plaque de support (10) qui présente une plaque en forme de film (11) en matière plastique, qui est plane ou profilée, et comprend un premier côté de plaque (22) qui est prévu pour être posé sur un support (31) et un deuxième côté de plaque (26) qui est opposée à la première face de plaque (22) et qui est prévue pour recevoir un agent de contact (34) durcissable, tel que du mortier ou de la colle, pour former une couche de contact avec le revêtement de surface (37) à appliquer, et avec une première couche fonctionnelle (27) disposée sur la deuxième face de plaque (26),
- la première couche fonctionnelle (27) étant formée d'une couche fibreuse, et
- une deuxième couche fonctionnelle (7) étant prévue au moins par sections sur le câble chauffant (6), laquelle est formée d'une bande à crochets et le câble chauffant (6) peut être fixé sur la plaque de support (10) par la première couche fonctionnelle (27) et la deuxième couche fonctionnelle (7) en formant une fermeture velcro,
**caractérisé en ce**
**que** la au moins une plaque de support (10) qui comprend la plaque en forme de film (11) en matière plastique est formée avec une pluralité de chambres (12) qui sont formées par des renfoncements (14) et/ou des reliefs d' d'un plan de la plaque en forme de feuille (11), dont les côtés frontaux extérieurs (21) forment le premier côté de plaque (22) et, à l'opposé, le deuxième côté de plaque (26) est formé par des sections de surface (16), et des sections de paroi (18) s'étendent perpendiculairement ou en s'effilant de manière conique depuis les sections de surface (16) vers les côtés frontaux (21) formant le premier côté de plaque (22) et les sections de surface (16) formant le deuxième côté de plaque (26), depuis les sections de surface (16) vers les côtés frontaux (21) de la chambre (12).

2. Système de régulation de température de surface selon la revendication 1, **caractérisé en ce que** la première couche fonctionnelle (27) est constituée d'un matériau en forme de bande et est au moins partiellement ou entièrement laminée, collée ou soudée sur la deuxième face de la plaque (26) et, de préférence, la première couche fonctionnelle (27) est fixée aux sections de surface (16) formées entre les renfoncements (14) et recouvre les renfoncements (14) ou tapisse les renfoncements (14) des chambres (12).

3. Système de régulation de température de surface selon l'une des revendications précédentes, **caractérisé en ce que** la première couche fonctionnelle (27) est constituée d'un feutre, d'un non-tissé, d'un tissu fibreux ou d'un tissu fibreux réticulé.

4. Système de régulation de température de surface selon la revendication 1, **caractérisé en ce que** la deuxième couche fonctionnelle (7) est conçue sous forme de bandes et entoure le câble chauffant (6) en hélice ou en spirale, ou est conçue sous forme d'au moins une bande longitudinale et est fixée à la gaine (8) du câble chauffant (6) le long du câble chauffant (6), la au moins une bande longitudinale entourant au moins partiellement la gaine (8) du câble chauffant (6) ou la bande longitudinale entourant complètement le câble chauffant (6), ou **en ce que** la deuxième couche fonctionnelle (7) est intégrée sur le pourtour extérieur d'une gaine (8) du câble chauffant (6) .

5. Système de régulation de température de surface selon l'une des revendications précédentes, **caractérisé en ce que** le câble chauffant (6) peut être fixé sur les sections de surface (16) et/ou en enjambant les renfoncements (14) sur les sections de surface (16) adjacentes aux renfoncements (14) sur la plaque de support (12) en formant des connexions à fermeture velcro.

6. Système de régulation de température de surface selon l'une des revendications précédentes, **caractérisé en ce qu'**une troisième couche fonctionnelle (23), en particulier un tissu ou un non-tissé, est prévue sur le premier côté (22) de la plaque de support (10).

7. Système de régulation de température de surface selon l'une des revendications précédentes, **caractérisé en ce que** la plaque de support (10) avec la première couche fonctionnelle (27) ou la plaque de support (10) avec les première et troisième couches fonctionnelles (27, 23) présente une hauteur inférieure à quatre millimètres.
